# EUROPÄISCHE PATENTANMELDUNG

(11) **EP 2 666 540 A1**
(43) Veröffentlichungstag der Anmeldung: **27.11.2013**
(21) Anmeldenummer: 12168945.9
(22) Anmeldetag: 22.05.2012
(51) Int. Cl.: B01J 23/89, B01J 37/02, B01J 37/14, B01J 37/18, C07D 307/36, C07D 307/44, B01J 33/00

(54) **Verfahren zur katalytischen Hydrodesoxygenierung von Furan-Derivaten und/oder Pyrolyseölen, der entsprechende Katalysator und dessen Herstellungsverfahren.**

(71) Anmelder: Karlsruher Institut für Technologie, 76344 Eggenstein-Leopoldshafen (DE)
(72) Erfinder: Reimer, Joachim, 5430 Wettingen (CH); Hellinger, Melanie, 75181 Pforzheim (DE); Grunwaldt, Jan-Dierk, 76297 Stutensee (DE)
(74) Vertreter: Fitzner, Uwe

(57) **Zusammenfassung**

Die vorliegende Erfindung betrifft ein Verfahren zur katalytischen Hydrodesoxygenierung von Furan-Derivaten enthaltenden Zusammensetzungen,insbesondere Pyrolyseölen, wobei ein Katalysator eingesetzt wird, dessen aktive Spezies Cu/Ru im rechnerischen Stoffmengenverhältnis 3:1 bis 3:2, geträgert auf Siliciumdioxid ist, und die Menge an Ru auf dem Träger 0,5 bis 8 Gew.-% beträgt, einen entsprechenden Katalysator sowie dessen Herstellung per Incipient Wetness Impregnation.

## Beschreibung

Alle in der vorliegenden Anmeldung zitierten Dokumente sind durch Verweis vollumfänglich in die vorliegende Offenbarung einbezogen (= incorporated by reference in their entirety).

Die vorliegende Erfindung betrifft ein Verfahren zur katalytischen Hydrodesoxygenierung von Furan-Derivaten enthaltenden Zusammensetzungen, insbesondere Pyrolyseölen, wobei ein spezieller erfindungsgemäßer Katalysator eingesetzt wird, den entsprechenden Katalysator sowie dessen Herstellung per Incipient Wetness Impregnation.

### Stand der Technik:

Biomasse wird von jeher als Energiequelle genutzt. Zwar gewannen mit Beginn der Industrialisierung fossile Rohstoffe zunehmend an Bedeutung, jedoch war die Nutzung von Biomasse als Kraftstoff bereits Anfang des 20. Jahrhunderts ein Thema. Frühe Automobile von Ford waren auf Ethanol als Kraftstoff ausgelegt. Während des Zweiten Weltkriegs wurden Kraftfahrzeuge mit Holzgas angetrieben. Angesichts des Klimawandels und der vorausgesagten Verknappung von Erdöl ist das Thema aktuell wie nie zuvor und Biokraftstoffe gewinnen seit einigen Jahren an Bedeutung. Als Biokraftstoffe der ersten Generation haben sich Biodiesel (Rapsmethylester) und Ethanol als Beimischung zum Otto-Kraftstoff etabliert. Diese Kraftstoffe stehen jedoch in der Kritik, da ihre Produktion in Konkurrenz zur Nahrungsmittelproduktion steht und die Öko- bzw. CO₂-Bilanz nicht immer positiv ausfällt.

Neuere Forschungsvorhaben zur stofflichen Verwertung von Biomasse unterteilen sich in zwei grundsätzlich verschiedene Herangehensweisen. Zum einen werden Techniken zur Vergasung, zum anderen Verfahren bei denen das Kohlenstoffgerüst erhalten bleibt, erforscht.

Trockene Biomasse wird in der Regel einer Hochtemperaturvergasung unterworfen, welche idealerweise zu Synthesegas (H₂ + CO) führt. Das Synthesegas wird anschließend zum Beispiel zur Fischer-Tropsch-Synthese verwendet, um synthetische Kraftstoffe herzustellen.

Im Bioliq^{(R)}-Verfahren des Karlsruher Instituts für Technologie werden beispielsweise Kraftstoffe aus Synthesegas über eine Alternativroute mit Dimethylether als Zwischenprodukt synthetisiert.

Zur Vergasung nasser Biomasse werden hydrothermale Verfahren untersucht.

Die Verflüssigung von Biomasse mittels thermischer Verfahren führt zu sogenannten Bio-Ölen mit unterschiedlichen Zusammensetzungen. Diese enthalten zum Beispiel phenolische Verbindungen, wie verschiedene Guajacole und Syringole, die Zersetzungsprodukte des Lignins sind. Weitere Bestandteile sind Furanderivate, die aus Cellulose und Hemicellulose gebildet werden. Weiterhin finden sich organische Säuren, Aldehyde, Ketone und Alkohole in den Pyrolyseölen, sowie anorganische Salze und Wasser.

Die Pyrolyseöle unterlaufen verschiedene Zersetzungsprozesse, welche die Lagerbarkeit einschränken. Ebenso machen der hohe Sauerstoffgehalt und die hohe Viskosität eine direkte Nutzung als Kraftstoff unmöglich. Hydrodesoxygenierungsreaktionen können den Sauerstoffgehalt auf unter 1% senken und so das Pyrolyseöl stabilisieren.

Ausgehend von Biomasse könnten in Zukunft auch vermehrt Fein- und Basischemikalien produziert werden. In mehreren Studien des Pacific Northwest National Laboratory (PNNL) wurden potenzielle Zwischenprodukte, sogenannte Biomasseplattformchemikalien, evaluiert.

Diese Plattformchemikalien könnten als Basis für eine "grüne" Chemieproduktion dienen und spielen dabei auch eine wichtige Rolle in der Konzeption von sogenannten Bioraffinerien.

Zu den vom PNNL evaluierten Biomasseplattformchemikalien gehören auch die in vorliegender Erfindung als Substrate eingesetzten Furanderivate Furfural und 5-Hydroxymethylfurfural (HMF).

Im Stand der Technik werden verschiedene Verwendungsmöglichkeiten für Desoxygenierungs- und Reduktionsprodukte von Furfural und HMF diskutiert. 2-Hydroxymethylfuran wird z.B. als Holzbehandlungsmittel eingesetzt. Weiterhin findet es Verwendung als Chemikalie bei der Herstellung von Vitamin C, Resinharzen und Lysin. 2-Methylfuran (MF) und 2,5-Dimethylfuran (DMF) werden aufgrund ihrer geringen Mischbarkeit mit Wasser und der hohen Oktanzahl (RON: 119 (DMF) bzw. 131 (MF)) als potenzielle Biokraftstoffe der 2. Generation bzw. als Kraftstoffzusätze in Betracht gezogen. 2,5-Bis-(hydroxymethyl)furan könnte in der Produktion von Kunststoffen zum Einsatz kommen. Bezüglich HMF wird über die Verwendung des Oxidationsprodukts 2,5-Furandicarbonsäure als Ersatzstoff für Terephthalsäure in der Kunststoffproduktion nachgedacht.

Neben Cracking und Dehydratisierung spielen Hydrodesoxygenierungsreaktionen (HDO) eine wichtige Rolle in der Produktion von Kraftstoffen. So wird der Sauerstoffgehalt von fossilen Kraftstoffen mittels heterogener Katalysatoren gesenkt. Kommerziell werden hierzu sulfidierte CoMo- und NiMo-Katalysatoren verwendet. Edelmetall-Katalysatoren für die Hydrodesoxygenierung sind ebenfalls bekannt.

Bei der Verwendung von biomassebasierten Substraten ist aufgrund des hohen Anteils von Sauerstoff eine effektive Hydrodesoxygenierung notwendig.

Ein Problem bei Reaktionen mit sulfidierten Katalysatoren stellt die Bildung von schwefelhaltigen Verbindungen im Produkt dar, sowie die Desaktivierung der Katalysatoren im Verfahrensverlauf. Eine nachgeschaltete Entschwefelung ist daher notwendig. Für die zukünftige Verwendung von Pyrolyseölen müssen neue Katalysatoren entwickelt werden, die speziell an die Anforderungen solcher Substrate, wie z.B den hohen Sauerstoffgehalt, angepasst sind.

Schon seit den 1940er Jahren ist es bekannt Hydrodesoxygenierung von Furfural mit Kupfer- und Kupferchromit-Katalysatoren als Gasphasenreaktionen durchzuführen. Die Hauptprodukte waren 2-Methylfuran und 2-Hydroxymethylfuran. Nachteilig dabei ist, dass Chromverbindungen toxisch bzw. zumindest bedenklich sind.

Cu/C Katalysatoren zeigen eine besondere Selektivität hinsichtlich des 2-Hydroxymethylfurans. Rao et al. (Furfural hydrogenation over carbonsupported copper. Catalysis Letters 60, 51-57 (1999)) untersuchten dabei Aktivkohle, Diamantpulver und Graphitfasern als Trägermaterialien.

Sittihisa und Resasco ("Hydrodeoxygenation of Furfural Over Supported Metal Catalysts: A Comparative Study of Cu, Pd and Ni", Catalysis Letters, (2011) 784-791) berichteten von einer hohen Selektivität (98%) bezüglich 2-Hydroxymethylfuran bei der Umsetzung von Furfural an monometallischen Kupferkatalysatoren mit SiO₂ als Trägermaterial.

HMF ist ein potentieller biomassebasierter Ausgangsstoff zur Produktion von Kraftstoffen. Als Syntheseprodukt ist vor allem das Dimethylfuran (DMF) interessant, da es einen hohen Energiegehalt, geringe Mischbarkeit mit Wasser und eine hohe Oktanzahl (119 RON) hat.

Descotes et al. (Hydrogénation catalytique du 5-hydroxyméthylfurfural en milieu aqeux. Bull. Soc. Chim. Fr., 704-711 (1991)) untersuchten die Reduktion von Hydroxymethylfurfural an verschiedenen Katalysatoren in wässriger Lösung. Im neutralen wässrigen Medium katalysieren Kupferchromit, Pt/C und PtO₂ die Reduktion von HMF zum 2,5-Bis-(hydroxymethyl)furan. In Gegenwart von Pd/C erfolgt zudem die Hydrierung des Rings zum 2,5-Bis-(hydroxymethyl)tetrahydrofuran. Mit Ru/C als Katalysator, wurde bei Reaktionszeiten bis zu einer Stunde das ungesättigte Diol erhalten, ab ca. 1,5 h überwiegt hingegen das gesättigte Diol.

Mittels eines Cu-Ru/C-Katalysators (10 Gew.-% Ru, Stoffmengenverhältnis Cu:Ru = 3:1) gelang Dumesic et al. (Production of dimethylfuran for liquid fuels from biomass-derived carbohydrates. Nature 447, 982-985 (2007)) die Darstellung von DMF in 1-Butanol mit einer Ausbeute von 71 % ausgehend von HMF aus Fructose. Nachteilig ist hierbei das Trägermaterial Kohlenstoff und die hohe Menge des teuren Rutheniums. Nachteilig ist ferner dass bei der Reaktion ausgehend von Fructose mehrere Reaktionspfade möglich sind, die zu Huminen führen.

Binder und Raines (Simple Chemical Transformation of Lignocellulosic Biomass into Furans for Fuels and Chemicals. Journal of the American Chemical Society 131, 1979-1985 (2009)) verwendeten einen ähnlichen Cu-Ru/C-Katalysator wie Dumesic, allerdings mit einem Rutheniumgehalt von 5 Gew.-% und einem Cu/Ru-Stoffmengenverhältnis von 3:2. Untersucht wurde die Darstellung von DMF ausgehend von Maisstroh.

Kohlenstoff als Träger ist nachteilig, da er apparativ extrem schwer handhabbar ist; der Kohlenstoff neigt dazu sich überall in der Apparatur festzusetzen und diese zu verkleben.

Zhang et al. ("Synthesis and evaluation of ruthenium-copper oxide/silica catalysts derived from microemulsion processing", Catalysis Letters 64 (2000) 179-184) präparierten Cu/Ru-Katalysatoren mit SiO₂ als Träger mittels Mikroemulsionssynthese, wobei das rechnerische Stoffmengenverhältnis von Cu:Ru höchstens 1,4:1 betrug und ausschließlich die Zersetzung von N₂O behandelt wird.

Wu et al. (Preparation of a Cu-Ru/carbon nanotube catalyst for hydrogenolysis of glycerol to 1,2-propanediol via hydrogen spillover. Green Chemistry 13, 1311-1316 (2011)) synthetisierten einen Cu/Ru-Katalysator mittels einer Austauschreaktion. Als Trägermaterial dienten Kohlenstoffnanoröhren.

Die Hydrodesoxygenierung von Biomasseplattformchemikalien ist ein wichtiges Forschungsfeld um die stoffliche Nutzung von Biomasse zu erschließen. Dabei spielt die Entwicklung und Charakterisierung von leistungsfähigen Katalysatoren eine große Rolle.

Die verschiedenen aus dem Stand der Technik bekannten Katalysatoren weisen jedoch hinsichtlich ihrer Performance sowie der Herstellungsverfahren noch Verbesserungspotential auf.

Zudem wurde im Stand der Technik wenig bis kein Fokus auf die Gewinnung von Furanen und Furanderivaten aus Pyrolyseölen gelegt.

### Aufgabe:

Aufgabe der vorliegenden Erfindung ist es Katalysatoren zur Verfügung zu stellen, mit denen die Hydrodesoxygenierung von Furanderivaten in besonders effizienter Weise möglich wird.

Ebenso war es Aufgabe der vorliegenden Erfindung, ein einfaches Verfahren zur Herstellung solcher Katalysatoren zur Verfügung zu stellen.

Nicht zuletzt war es Aufgabe der vorliegenden Erfindung, ein Verfahren zur Hydrodesoxygenierung von Furan-Derivaten enthaltenden Zusammensetzungen, insbesondere Pyrolyseölen, zur Verfügung zu stellen, dass wirtschaftlich und effektiv verläuft.

### Aspekt aller Aufgabenstellungen der vorliegenden Erfindung war es es auch, eine hohe ökologische Verträglichkeit zu gewährleisten, d.h. insbesondere auf Chrom enthaltende Katalysatoren zu verzichten.

### Lösung:

Diese Aufgabenstellungen werden durch
- ein Verfahren zur katalytischen Hydrodesoxygenierung von Furan-Derivaten enthaltenden Zusammensetzungen, wobei ein Katalysator eingesetzt wird, dessen aktive Spezies Cu/Ru im rechnerischen Stoffmengenverhältnis 3:1 bis 3:2, geträgert auf Siliciumdioxid ist, und die Menge an Ru auf dem Träger 0,5 bis 8 Gew.-% beträgt,
- einen entsprechenden Katalysator
- sowie dessen Herstellung per Incipient Wetness Impregnation
   gelöst.

### Begriffsdefinitionen:

Im Rahmen der vorliegenden Erfindung sind alle Mengenangaben, sofern nicht anders angegeben, als Gewichtsangaben zu verstehen.

Im Rahmen der vorliegenden Erfindung bedeutet der Begriff "Zimmertemperatur" eine Temperatur von 20°C. Temperaturangaben sind, soweit nicht anders angegeben, in Grad Celsius (°C).

Sofern nichts anderes angegeben wird, werden die angeführten Reaktionen bzw. Verfahrensschritte bei Normaldruck/Atmosphärendruck, d.h. bei 1013 mbar, durchgeführt.

Sofern nicht anders angeführt sind alle Druckangaben absolute Druckangaben. Druck-, Temperatur- und Mengenangaben sind im Rahmen der vorliegenden Erfindung so zu verstehen, dass sie geringfügige Abweichungen durch Messungenauigkeiten und/oder Messfehler umfassen, insbesondere Abweichungen von plus/minus 0,5% des angeführten Zahlenwertes.

Im Rahmen der vorliegenden Erfindung schließt die Formulierung "und/oder" sowohl jede beliebige als auch alle Kombinationen der in der jeweiligen Auflistung genannten Elemente ein.

Im Rahmen der vorliegenden Erfindung bedeuten:
FAL = Furfural, HMF = 5-Hydroxymethylfurfural, MF = 2-Methylfuran, DMF = 2,5-Dimethylfuran, 2-HMF = 2-Hydroxymethylfuran, BHMF = 2,5-Bis-(hydroxymethyl)furan, IWI = Incipient Wetness Impregnation.

### Detaillierte Beschreibung:

Die vorliegende Erfindung betrifft insbesondere die Umsetzung der Biomasseplattformchemikalien Furfural und 5-Hydroxymethylfurfural. Diese Umsetzung erfolgt im Rahmen der vorliegende Erfindung durch die Hydrodesoxygenierung der oben genannten Substanzen zur Darstellung von 2-Methylfuran, 2-Hydroxymethylfuran, 2,5-Bis-(hydroxymethyl)furan und 2,5-Dimethylfuran, insbesondere 2-Methylfuran, 2,5-Bis-(hydroxymethyl)furan und 2,5-Dimethylfuran.

Die so erhaltenen Produkte können beispielsweise als Substrate in einer zukünftigen nachhaltigen Chemikalienproduktion oder als sogenannte Biokraftstoffe Verwendung finden.

Als Katalysatoren werden im Rahmen der vorliegenden Erfindung auf Siliciumdioxid geträgerte Systeme von Kupfer und Ruthenium verwendet.

Es ist möglich im Rahmen der vorliegenden Erfindung Furfural und/oder 5-Hydroxymethylfurfural direkt einzusetzen. Diese Produkte können käuflich erworben werden. Genauso lässt sich Furfural z.B. durch Wasserdampfdestillation von Kleie oder anderer pentosehaltiger Biomasse mit Schwefelsäure gewinnen; 5-Hydroxymethylfurfural kann man z.B. aus man aus Hexosen bzw. hexosehaltiger Biomasse durch Dehydratisierung mit verschiedenen Katalysatoren synthetisieren.

Insbesondere ist es im Rahmen der vorliegenden Erfindung möglich, in einer bevorzugten Variante Furan-Derivate enthaltende Pyrolyseöle einzusetzen. Diese können falls gewünscht vorher durch übliche Maßnahmen aufgearbeitet werden, beispielsweise durch Destillation.

Demgemäß ist insbesondere auch Gegenstand der vorliegenden Erfindung ein Verfahren zur Aufarbeitung von Pyrolyseölen, bei dem die Pyrolyseöle mittels des erfindungsgemäßen Katalysators umgesetzt werden.

Die vorliegende Erfindung betrifft insbesondere ein Verfahren zur katalytischen Hydrodesoxygenierung von Furan-Derivaten enthaltenden Zusammensetzungen, insbesondere Pyrolyseölen, bei dem die Furan-Derivate enthaltende Zusammensetzung
a) bei Temperaturen von 210 bis 250°C, bevorzugt 220 bis 230°C, insbesondere 220 oder 230°C,
b) unter Wasserstoffatmosphäre eines Druckes von 5 bis 40 Bar, bevorzugt 10 bis 30 bar, insbesondere 20 bar,
c) für einen Zeitraum von 15 Minuten bis 30 Stunden,
mit einem Katalysator in Gegenwart eines Lösemittels, in Kontakt gebracht und umgesetzt wird,
wobei ein Katalysator eingesetzt wird, der dadurch gekennzeichnet ist, dass
i) dessen aktive Spezies Cu/Ru im rechnerischen Stoffmengenverhältnis 3:1 bis 3:2, insbesondere 3:1, geträgert auf Siliciumdioxid ist, und
ii) dass die Menge an Ru auf dem Träger 0,5 bis 8 Gew.-%, bevorzugt 1 bis 5 Gew.-%, insbesondere 1 oder 5 Gew.-% beträgt.

Der in diesem Verfahren eingesetzte Katalysator wird bevorzugt mittels der Incipient Wetness Impregnation hergestellt, insbesondere wie weiter unten beschrieben.

In einer bevorzugten Ausgestaltung des erfindungsgemäßen Verfahrens wird vor dem Inkontaktbringen der Furan-Derivate enthaltenden Zusammensetzungen mit dem Katalysator der Sauerstoff aus diesen Zusammensetzungen entfernt, insbesondere durch Spülung mit Wasserstoff und/oder Stickstoff.

Im Rahmen besonders bevorzugter Ausgestaltungen der vorliegenden Erfindung kann die Furan-Derivate enthaltende Zusammensetzungen
- Furfural oder
- 5-Hydroxymethylfurfural oder
- Furfural und 5-Hydroxymethylfurfural
   enthalten oder daraus bestehen.

Besonders bevorzugte erfindungsgemäße Verfahren sind demgemäß solche, bei denen Furfural zu 2-Methylfuran umgesetzt wird oder bei denen 5-Hydroxymethylfurfural zu 2,5-Dimethylfuran umgesetzt wird.

Besonders bevorzugte Lösemittel für die katalytische Umsetzungsreaktion der vorliegenden Erfindung sind ausgewählt aus der Gruppe bestehend aus sauerstoffhaltigen Lösungsmitteln, insbesondere solchen, die in Pyrolyseölen vorkommen. Insbesondere bevorzugt sind solche mit einer Polarität delta EN = 0,4 - 1,7 (stark polar), höchst bevorzugt ausgewählt aus der Gruppe bestehend aus Ethanol, Propanolen, Butanolen, Pentanolen und Gemischen davon, am allermeisten bevorzugt Butanole.

Gleichwohl kann das Lösemittel in Abhängigkeit von den eingesetzten Edukten entsprechend angepasst werden, wie dem Fachmann bekannt ist. Gegenstand der vorliegende Erfindung sind ebenfalls Katalysatoren, insbesondere für die Hydrodesoxygenierung, dadurch gekennzeichnet ist, dass
i) deren aktive Spezies Cu/Ru im rechnerischen Stoffmengenverhältnis 3:1 bis 3:2, insbesondere 3:1, geträgert auf Siliciumdioxid ist, und
ii) dass die Menge an Ru auf dem Träger 0,5 bis 8 Gew.-%, bevorzugt 1 bis 5 Gew.-%, insbesondere 1 oder 5 Gew.-% beträgt.

In einer bevorzugten Ausführungsform der vorliegenden Erfindung werden diese Katalysatoren mittel Incipient Wetness Impregnation hergestellt, insbesondere wie weiter unten beschrieben.

Selbstverständlich sind die Katalysatoren der vorliegenden Erfindung nicht auf den Einsatz in der Hydrodesoxygenierung beschränkt, sondern eignen sich auch für andere Einsatzgebiete.

Gegenstand der vorliegenden Erfindung ist weiterhin eine Verfahren zur Herstellung der erfindungsgemäßen Katalysatoren bzw. von in dem erfindungsgemäßen Hydrodesoxygenierungsverfahren einsetzbaren Katalysatoren mittels Incipient Wetness Impregnation.

Bei der Incipient Wetness Impregnation zur Herstellung des erfindungsgemäßen heterogenen Katalysators geht man wie folgt vor:
Es werden Kupfersalze bzw. Rutheniumsalze als Precursoren (Ausgangsverbindungen) eingesetzt.

Die Salze werden dabei so ausgewählt, dass sie sich in niedrigsiedenden Lösemitteln (Lösemittel mit Siedepunkt kleiner oder gleich 150°C) zu mindestens 10 g/l (gemessen bei 20°C) lösen.

Besonders geeignet sind dabei anorganische Kupfersalze und Rutheniumsalze mit organischen Anionen.

Als Kupfersalze eignen sich insbesondere Kupfer(II)nitrat-Hemipentahydrat, Kupfernitrat und/oder ähnliche lösliche Salze des Kupfers.

Im Rahmen der vorliegenden Erfindung wird insbesondere bevorzugt Kupfer(II)nitrat-Hemipentahydrat eingesetzt.

Als Rutheniumsalze eignen sich insbesondere Rutheniumacetylacetonat, Rutheniumacetat und/oder ähnliche lösliche Salze des Rutheniums.

Im Rahmen der vorliegenden Erfindung wird insbesondere bevorzugt Rutheniumacetylacetonat eingesetzt.

Zunächst werden die beiden Katalysator-Precursoren jeweils in geeigneten Lösemitteln gelöst.

Für die Kupfersalze ist dies bevorzugt Wasser, insbesondere vollentsalztes Wasser.

Für die Rutheniumsalze sind dies bevorzugt Alkohole mit 1 bis 4 Kohlenstoffatomen, insbesondere Ethanol.

Danach werden die metallhaltigen Lösungen zu dem Katalysatorträger gegeben.

Als Katalysatorträger werden im Rahmen der vorliegenden Erfindung oxidische Träger eingesetzt, bevorzugt Metalloxide, insbesondere Aluminiumoxid und/oder Siliciumdioxid.

Der Katalysatorträger ist im Rahmen der vorliegenden Erfindung höchst bevorzugt Siliciumdioxid, am meisten bevorzugt hochdisperses Siliciumdioxid.

Das Trägermaterial kann in einer bevorzugten Variante der vorliegenden Erfindung zur Befreiung von organischen Verunreinigungen und/oder von Wasser einer thermischen Vorbehandlung unterzogen werden.

Dabei kann das Aufnahmevermögen des Katalysatorträgers dem Volumen der zugegebenen Lösungen entsprechen, wobei dann durch Kapillarkräfte die metallhaltigen Lösungen in die Poren des Trägermaterials gezogen werden, oder das Aufnahmevermögen des Trägers ist geringer als das Volumen der zugegebenen metallhaltigen Lösungen; in diesem Falle erfolgt die Einlagerung der Metalle durch Diffusionsprozesse.

In einer Variante der vorliegenden Erfindung, kann das Porenvolumen (Aufnahmevermögen) des Katalysatorträgers beispielsweise im Bereich von 7*10⁻² cm³/g bis 10*10⁻² cm³/g liegen.

Die beiden metallhaltigen Lösungen können entweder zusammen oder nacheinander zugegeben werden, wobei es bevorzugt ist, die Lösungen nacheinander zuzugeben.

Sofern die Lösungen nacheinander zugegeben werden, ist es möglich und bevorzugt, nach Zugabe der ersten Precursorlösung und vor Zugabe der zweiten Precursorlösung einen Trocknungsschritt auszuführen.

Bevorzugt ist es, zuerst die Kupfersalzlösung zu applizieren und als zweites die Rutheniumsalzlösung.

Danach kann falls gewünscht ein Homogenisierungsschritt erfolgen.

Der so erhaltene Katalysator wird dann getrocknet und kalziniert, wobei die volatilen Bestandteile ausgetrieben werden und wodurch die Metalle auf der Trägeroberfläche abgeschieden werden.

Anschließend kann im Rahmen der vorliegenden Erfindung der Katalysator noch reduziert werden, indem beispielsweise Wasserstoff übergeleitet wird.

Falls gewünscht oder notwendig kann abschließend der Katalysator noch passiviert werden, beispielsweise indem ein Sauerstoff enthaltendes Gasgemisch übergeleitet wird.

In einer besonders bevorzugten Ausgestaltung der vorliegenden Erfindung umfasst oder besteht das Verfahren zur Herstellung der erfindungsgemäßen Katalysatoren bzw. von in dem erfindungsgemäßen Hydrodesoxygenierungsverfahren einsetzbaren Katalysatoren aus den Schritten
1a) Lösen von
   a) Kupfer(II)nitrat-Hemipentahydrat in vollentsalztem Wasser und
   b) Rutheniumacetylacetonat in Ethanol,
2a) gegebenenfalls thermische Vorbehandlung von hochdispersem Siliciumdioxid zur Befreiung von organischen Verunreinigungen,
2b) Zugabe der in Schritt 1a) erhaltenen Lösung zu dem trockenem, pulverförmigen hochdispersen Siliciumdioxid und Trocknen, bevorzugt für 8 bis 12 Stunden bei 70 bis 90°C,
2c) Zugabe der in Schritt 1b) erhaltenen Lösung zu dem in Schritt 2b) erhaltenen Feststoff und Trocknen, bevorzugt für 8 bis 12 Stunden bei 70 bis 90°C,
   wobei das Aufnahmevermögen des Siliciumdioxids dem Volumen der zugegebenen Lösungen 1a) und 1b) entspricht,
3) gegebenenfalls Homogenisieren der in Schritt 2c) erhaltenen Substanz,
4) Kalzinieren des getrockneten Katalysators in einem Ofen, bevorzugt für 2 bis 6 Stunden bei 300 bis 700°C,
5) Reduzieren des in Schritt 4) erhaltenen Katalysators im Wasserstoffstrom, bevorzugt durch Aufheizen auf 300 bis 400°C und Halten bei dieser Temperatur für 1 bis 4 Stunden, insbesondere mittels eines Wasserstoff/Stickstoffstromes bevorzugt von 100 ml/min H₂ in 1000 ml/min N₂,
6) gegebenenfalls Abkühlen lassen auf Raumtemperatur und
7) Passivieren des erhaltenen Katalysators durch Überleiten eines Sauerstoff/Stickstoffstromes, bevorzugt 20 ml/min O₂ in 1000 ml/min N₂ für 0,5 bis 3 Stunden.

Durch die spezielle Herstellung des erfindungsgemäßen Katalysators erhält dieser ein Eigenschaftsprofil, welches ihn sehr gut für die Hydrodesoxygenierung von Furan-Derivaten und/oder Pyrolyseölen geeignet macht.

Durch die Wahl einer erhöhten Reaktionstemperatur kann die erfindungsgemäße Hydrodesoxygenierungs-Reaktion beschleunigt werden. Ebenso ist es möglich, durch längere Reaktionszeiten die Ausbeute zu erhöhen. Auch kann durch Einsatz höherer Katalysatormengen die Ausbeute erhöht und gleichzeitig die Bildung von Nebenprodukten verringert werden.

Die Katalysatoren der vorliegenden Erfindung sind mit einfachen Mitteln synthetisierbar.

Die bimetallischen Katalysatoren der vorliegenden Erfindung mit Cu/Ru auf SiO₂ als Trägermaterial sind für die Hydrodesoxygenierung von Furanderivaten und/oder Pyrolyseölen sehr gut geeignet.

Mit den erfindungsgemäßen Katalysatoren bzw. dem erfindungsgemäßen Verfahren lassen sich gute Zeit/Ausbeute-Verhältnisse realisieren; es kann somit besonders effizient gearbeitet werden.

Das erfindungsgemäße Verfahren läuft wirtschaftlich, insbesondere wegen des vergleichsweise geringen Rutheniumanteils, und effektiv ab, da gute Umsätze erzielbar sind.

Die erfindungsgemäßen Katalysatoren und demgemäß das erfindungsgemäße Verfahren weisen gute ökologische Verträglichkeiten auf.

Die verschiedenen Ausgestaltungen der vorliegenden Erfindung, z.B. aber nicht ausschließlich diejenigen der verschiedenen abhängigen Ansprüche, können dabei in beliebiger Art und Weise miteinander kombiniert werden.

Die Erfindung wird nun unter Bezugnahme auf die folgenden nichtlimitierenden Beispiele erläutert.

### Beispiele:

### Synthese der Katalysatoren:

Alle Katalysatoren wurden mittels incipient-wetness-impregnation (IWI) synthetisiert. Als Trägermaterial wurde hochdisperses Siliciumdioxid verwendet. Das SiO₂ wurde im Muffelofen vorbehandelt um organische Verunreinigungen auszuschließen. Der Träger wurde hierzu im Keramiktiegel im Ofen vorgelegt und mit einer Heizrate von 150°C/h auf 600°C erhitzt. Diese Temperatur wurde für 8 Stunden gehalten. Nach dem Abkühlen wurde das Aufnahmevermögen (g Lösungsmittel/g Trägermaterial) des Trägermaterials für Wasser (4,33) und Ethanol (2,34) bestimmt.

Als Metallsalze wurden Cu(NO₂)₂ *2,5 H₂O und Ru(acac)₃ verwendet.

Das Kupfernitrat wurde in der entsprechenden Menge vollentsalztem Wasser gelöst, das Rutheniumacetylacetonat in Ethanol.

Auf die Trägersubstanz wurde zuerst die Kupferlösung aufgebracht, dann wurde über Nacht im Trockenschrank bei 80°C getrocknet und anschließend mit der Rutheniumlösung versetzt. Nach erneutem Trocknen bei 80°C über Nacht wurde die Substanz homogenisiert und im Muffelofen bei 400°C für 4 Stunden kalziniert. Anschließend wurden die Katalysatoren im Rohrofen reduziert. Hierzu wurde mit 120°C/h im Wasserstoffstrom (100 ml/min H₂ in 1000 ml/min N₂) auf 350°C erhitzt und 2 Stunden bei dieser Temperatur gehalten. Anschließend wurde auf Raumtemperatur abgekühlt und mit 20 ml/min O₂ in 1000 ml/min N₂ für eine Stunde passiviert. Die Passivierung wurde durchgeführt, um zu verhindern dass die Metallpartikel auf dem Katalysator durch Kontakt mit dem Luftsauerstoff unkontrolliert oxidiert werden.

**Tabelle 1: Zusammenfassung der synthetisierten Katalysatoren mit Einwaagen Katalysator; Die Cu:Ru-Verhältnisse beziehen sich auf die berechneten Stoffmengen**

| **Katalysator** | **Einwaage SiO₂ [g]** | **Einwaage Cu(NO₃)₂ * 2,5 H₂O [g]** | **Einwaage Wasser [g]** | **Einwaage Ru(acac)₃ [g]** | **Einwaage Ethanol [g]** |
|---|---|---|---|---|---|
| Cu/SiO₂ 1 Gew.-% | 4,95 | 0,183 | 21,5 | 0,00 | 0,00 |
| Cu/SiO₂ 5 Gew.-% | 4,75 | 0,915 | 20,6 | 0,00 | 0,00 |
| Cu/SiO₂ 10 Gew.-% | 4,50 | 1,83 | 19,6 | 0,00 | 0,00 |
| Ru/SiO₂ 1 Gew.-% | 4,95 | 0,00 | 0,00 | 0,192 | 11,0 |
| Ru/SiO₂ 5 Gew.-% | 4,75 | 0,00 | 0,00 | 0,956 | 19,0 |
| Cu/Ru (3:1)/SiO₂ 1 Gew.-% | 4,86 | 0,345 | 21,1 | 0,192 | 12,7 |
| Cu/Ru (3:1)/SiO₂ 5 Gew.-% | 4,28 | 1,73 | 18,6 | 0,957 | 9,63 |
| Cu/Ru (3:2)/SiO₂ 1 Gew.-% | 4,90 | 0,173 | 21,3 | 0,192 | 11,5 |
| Cu/Ru (3:2)/SiO₂ 5 Gew.-% | 4,51 | 0,863 | 19,6 | 0,957 | 10,0 |

### Hydrodesoxygenierung:

Für die Hydrodesoxygenierung wurden zwei Hochdruckautoklaven benutzt. Die Autoklaven bestehen aus Edelstahl und besitzen ein Innenvolumen von 70 ml. Am Deckel befinden sich Anschlüsse für ein Manometer, Befüllstutzen mit Kugelhahn und Schnellkupplung, Entleerstutzen mit Kugelhahn, Sicherheitsventil und ein Thermoelement, welches bis ca. 1 cm über den Boden des Reaktionsgefäßes reicht. Die Autoklaven waren ausgelegt auf einen Maximaldruck von 200 bar und eine Maximaltemperatur von 250°C. Es wurden Dichtigkeitsprüfungen mit H₂ bis 60 bar durchgeführt. Die Heizung der Autoklaven erfolgt über Heizrührer der Firma Heidolph. Für eine gleichmäßige Wärmeverteilung sorgte ein an den Autoklaven angepasster Ring aus Aluminium, in welchem sich eine Bohrung für das Thermoelement zur Regelung des Heizrührers befindet. Zum Auslesen der Innentemperatur wurde ein eigens gefertigtes digitales Anzeigegerät verwendet.

Für die Versuche wurden jeweils frische Lösungen der Edukte mit einem Gehalt von 0,2 mol/l (entspricht ca. 3 Gew.-% bei HMF, ca. 2,3 Gew.-% bei Furfural) in n-Butanol angesetzt. Als interner Standard für die GC-Analytik wurden zusätzlich 0,1 mol/l n-Decan zugegeben. Der exakte Gehalt der Lösungen wurde unmittelbar vor Benutzung mittels GC verifiziert.

20 ml der Lösungen wurden im Autoklaven vorgelegt und mit 20±0,2 mg Katalysator (5 Gew.-% Katalysatoren) bzw. 100±1 mg (1 Gew.-% Katalysatoren) versetzt, um somit einen gleichen Gesamtgehalt an Metall zu gewährleisten. Nach Verschließen der Autoklaven wurde dreimal mit N₂ gespült (Hausleitung ca. 6 bar). Anschließend wurde zweimal mit H₂ gespült und der Autoklav befüllt.

Um eine Innentemperatur von 220°C zu erreichen wurde dabei der Temperaturregler des Heizrührers auf 240°C eingestellt bis die Innentemperatur erreicht war. Danach wurde auf 225°C heruntergeregelt. Für eine Innentemperatur von 230°C wurde bis zum Erreichen dieser Temperatur der Regler auf 260°C eingestellt. Anschließend wurde die Temperatur für 5 Minuten auf 250°C geregelt und schließlich auf eine Außentemperatur von 240°C erniedrigt. Auf diese Art konnten die Zieltemperaturen in durchschnittlich 24 Minuten erreicht werden. Die Zeitmessung begann mit dem Erreichen der gewünschten Innentemperatur.

Nach definierter Reaktionszeit wurden die Autoklaven im Eisbad gekühlt, belüftet und die Reaktionslösungen in Schnappdeckelgläser überführt. Von den Lösungen wurden 0,1 ml (HMF) bzw. 0,05 ml (Furfural) in ein GC-Glas gegeben und mit 1 ml Dichlormethan verdünnt.

Für die Analyse der Proben wurden Gaschromatographen der Firma Shimadzu (GC2010 plus) mit Flammenionisationsdetektoren (FID) verwendet. Als Trägergas wurde Helium verwendet. Edukte und Produkte wurden jeweils gegen den internen Standard kalibriert und aus den so gewonnenen Daten die Umsätze und Ausbeuten errechnet.

Methode 1: Für alle Edukte und Produkte mit Ausnahme des 2,5-Dimethylfurans wurde als Trennsäule ein Rxi®-624Sil MS (30 m, 0,25 mm, 1,25 µm) der Firma Restek verwendet. Die Säule wurde während der Messung zunächst 5 Minuten bei 40°C gehalten und anschließend mit 5°C/min auf 70°C beheizt. Die Temperatur wurde im Anschluss mit 10°C/min auf 300°C gebracht und für 5 Minuten gehalten. Der Druck betrug 143,8 kPa, der Gasfluss lag bei 40,9 ml/min. Es wurde eine Split-Injektion mit einem Splitverhältnis von 1:20 und einem Injektionsvolumen von 1 µl verwendet.

Methode 2: Zur Bestimmung des Gehalts an 2,5-Dimethylfuran fand eine Trennsäule Rxi®-5Sil MS (30 m, 0,25 mm, 0,25 µm) der Firma Restek Verwendung, da 2,5-Dimethylfuran und Butanol sich auf der erstgenannten Säule nicht trennen ließen. Die Säule wurde während der Messung zunächst 1 Minute bei 50°C gehalten und anschließend mit 10°C/min auf 280°C beheizt und diese Temperatur für 5 Minuten gehalten. Der Druck betrug 134,8 kPa, der Gasfluss lag bei 42,9 ml/min. Es wurde eine Split-Injektion mit einem Splitverhältnis von 1:20 und einem Injektionsvolumen von 1 µl verwendet.

### Umsetzung von Furfural:

Als Reaktionsbedingungen wurde ein Wasserstoffdruck von 10 bar, eine Reaktionstemperatur von 220°C und eine Reaktionszeit von 1,5 Stunden gewählt. Um die Ergebnisse zwischen den Katalysatoren mit 1 Gew.-% und 5 Gew.-% Beladung vergleichen zu können, wurde die Einwaage an Katalysator entsprechend angepasst. Als am vorteilhaftesten stellten sich die Katalysatoren mit einem Verhältnis Cu:Ru = 3:1 heraus.

**Tabelle 2**

| **Katalysator** | **m (Kat.) [mg]** | **Umsatz [%]** | **Ausbeute 2-Hydroxymethylfuran [%]** | **Ausbeute MF [%]** |
|---|---|---|---|---|
| Kein Katalysator | 0,0 | 8,8 | 4,4 | 0,0 |
| Cu/SiO₂ 5 Gew.-% | 100,7 | 21 | 17 | 0,0 |
| Cu/SiO₂ 10 Gew.-% | 50,2 | 11 | 5,8 | 0,0 |
| Ru/SiO₂ 1 Gew.-% | 99,9 | 61 | 50 | 1,3 |
| Ru/SiO₂ 5 Gew.-% | 20,1 | 18 | 9 | 0,0 |
| Cu/Ru (3:1)/SiO₂ 1 Gew.-% | 100,0 | 71 | 44 | 1,8 |
| Cu/Ru (3:1)/SiO₂ 5 Gew.-% | 20,2 | 79 | 60 | 2,1 |
| Cu/Ru (3:2)/SiO₂ 1 Gew.-% | 100,3 | 58 | 38 | 1,2 |
| Cu/Ru (3:2)/SiO₂ 5 Gew.-% | 20,1 | 63 | 41 | 1,2 |

Sowohl die monometallischen Cu-Katalysatoren, als auch die Ru-Katalysatoren zeigen sehr viel geringere Aktivitäten bezüglich der Hydrodesoxygenierung als die bimetallischen Katalysatoren.

Mit den effektivsten Kupfer-Ruthenium-Katalysatoren wurden weitere Versuche durchgeführt.

Als erstes wurde die Temperatur erhöht.

**Tabelle 3: Variation der Temperatur 220°C/230°C**

| **Katalysator** | **T [°C]** | **m (Kat.) [mg]** | **Umsatz [%]** | **Ausbeute 2-Hydroxymethylfuran [%]** | **Ausbeute MF [%]** |
|---|---|---|---|---|---|
| Cu/Ru (3:1)/ SiO₂ 1 Gew.-% | 220 | 100,0 | 71 | 44 | 1,8 |
| Cu/Ru (3:1)/ SiO₂ 1 Gew.-% | 230 | 100,1 | 86 | 61 | 3,6 |
| Cu/Ru (3:1)/ SiO₂ 5 Gew.-% | 220 | 20,2 | 79 | 60 | 2,1 |
| Cu/Ru (3:1)/ SiO₂ 5 Gew.-% | 230 | 19,9 | 81 | 61 | 2,9 |
| Cu/Ru (3:2)/ SiO₂ 1 Gew.-% | 220 | 100,3 | 58 | 38 | 1,2 |
| Cu/Ru (3:2)/ SiO₂ 1 Gew.-% | 230 | 100,3 | 74 | 57 | 2,1 |
| Cu/Ru (3:2)/ SiO₂ 5 Gew.-% | 220 | 20,1 | 63 | 41 | 1,2 |
| Cu/Ru (3:1)/ SiO₂ 5 Gew.-% | 230 | 20,2 | 80 | 66 | 2,2 |

Mit Erhöhung der Temperatur stiegen Umsatz und Ausbeute an 2-Hydroxymethylfuran an. Die Ausbeute an 2-Methylfuran steigerte sich ebenfalls. Die größte Veränderung in der Ausbeute ließ sich bei dem Katalysator mit 1 Gew.-% Ru und einem Cu:Ru Verhältnis von 3:1 beobachten. Hier stieg die Ausbeute an MF von 1,8% auf 3,6% an.

Dann wurde die Reaktionszeit variiert, nachfolgend dargestellt für den Katalysator Cu/Ru (3:1)/SiO₂; 5 Gew.-%.

**Tabelle 4: Variation der Reaktionszeit bei 220°C und 10 bar H₂-Druck**

| **Katalysator** | **t [h]** | **m (Kat.) [mg]** | **Umsatz [%]** | **Ausbeute 2-Hydroxymethylfuran [%]** | **Ausbeute MF [%]** |
|---|---|---|---|---|---|
| Cu/Ru (3:1)/ SiO₂ 5 Gew.-% | 1,5 | 20,2 | 79 | 60 | 2,1 |
| Cu/Ru (3:1)/ SiO₂ 5 Gew.-% | 3,0 | 20,1 | 97 | 73 | 3,6 |
| Cu/Ru (3:1)/ SiO₂ 5 Gew.-% | 6,0 | 20,0 | 98 | 71 | 7,6 |
| Cu/Ru (3:1)/ SiO₂ 5 Gew.-% | 9,0 | 20,0 | 98 | 69 | 12 |
| Cu/Ru (3:1)/ SiO₂ 5 Gew.-% | 15 | 19,8 | 97 | 44 | 26 |
| Cu/Ru (3:1)/ SiO₂ 5 Gew.-% | 20 | 20,1 | 97 | 28 | 37 |

Die Ausbeute an 2-Methylfuran nimmt über den gesamten Reaktionsverlauf stetig zu.

**Tabelle 5: Variation der Reaktionszeit bei 230°C und 10 bar H₂-Druck**

| **Katalysator** | **t [h]** | **m (Kat.) [mg]** | **Umsatz [%]** | **Ausbeute 2-Hydroxymethylfuran [%]** | **Ausbeute MF [%]** |
|---|---|---|---|---|---|
| Cu/Ru (3:1)/ SiO₂ 5 Gew.-% | 1,5 | 19,9 | 81 | 61 | 2,9 |
| Cu/Ru (3:1)/ SiO₂ 5 Gew.-% | 3,0 | 19,9 | 94 | 63 | 6,1 |
| Cu/Ru (3:1)/ SiO₂ 5 Gew.-% | 6,0 | 20,2 | 98 | 62 | 14 |
| Cu/Ru (3:1)/ SiO₂ 5 Gew.-% | 9,0 | 20,0 | 97 | 51 | 25 |
| Cu/Ru (3:1)/ SiO₂ 5 Gew.-% | 15 | 20,0 | 94 | 14 | 48 |
| Cu/Ru (3:1)/ SiO₂ 5 Gew.-% | 20 | 20,1 | 95 | 8,6 | 56 |

Bei einer Reaktionstemperatur von 230°C zeigte sich ein qualitativ ähnlicher Verlauf von Umsatz und Ausbeuten wie bei den Versuchen bei 220°C. Der Umsatz von Furfural ist ebenfalls bei ca. 3 Stunden Reaktionsdauer quantitativ. Die Ausbeute von 2-Hydroxymethylfuran durchlief das Maximum ebenfalls bei 3 Stunden Reaktionsdauer, fiel danach aber schneller ab. In ähnlichem Maß stieg die Ausbeute an 2-Methylfuran schneller an als bei der Umsetzung bei niedrigerer Temperatur.

Die höchste Ausbeute an dem Produkt, 2-Methylfuran, wurde mit 56% bei einer Reaktionszeit von 20 Stunden bei 230°C erhalten.

### Umsetzung von 5-Hydroxymethylfurfural:

Wie schon bei den Umsetzungen mit Furfural, waren auch bei den Versuchen mit 5-Hydroxymethylfurfural die Katalysatoren mit einem Verhältnis von 3:1 Cu:Ru diejenigen mit den höchsten Umsätzen.

Es wurden die gleichen Versuche wie mit Furfural durchgeführt. Es ließ sich ebenfalls eine Steigerung der Ausbeute des Hydrierungsprodukts Bis-(hydroxymethyl)furan (BHMF) beobachten.

Mit den effektivsten Katalysatoren Kupfer-Ruthenium-Katalysatoren wurden weitere Versuche durchgeführt.

Als erstes wurde die Temperatur erhöht.

**Tabelle 6: Variation der Temperatur 220°C/230°C**

| **Katalysator** | **T [°C]** | **m (Kat.) [mg]** | **Umsatz [%]** | **Ausbeute BHMF [%]** | **Ausbeute DMF [%]** |
|---|---|---|---|---|---|
| Cu/Ru (3:1)/ SiO₂ 1 Gew.-% | 220 | 100,3 | 51 | 26 | 2,6 |
| Cu/Ru (3:1)/ SiO₂ 1 Gew.-% | 230 | 99,8 | 78 | 58 | 2,7 |
| Cu/Ru (3:1)/ SiO₂ 5 Gew.-% | 220 | 20,0 | 65 | 55 | 2,5 |
| Cu/Ru (3:1)/ SiO₂ 5 Gew.-% | 230 | 20,1 | 83 | 72 | 3,7 |
| Cu/Ru (3:2)/ SiO₂ 1 Gew.-% | 220 | 100,2 | 42 | 14 | 1,0 |
| Cu/Ru (3:2)/ SiO₂ 1 Gew.-% | 230 | 99,9 | 68 | 51 | 1,4 |
| Cu/Ru (3:2)/ SiO₂ 5 Gew.-% | 220 | 20,2 | 57 | 50 | 1,9 |
| Cu/Ru (3:1)/ SiO₂ 5 Gew.-% | 230 | 20,2 | 81 | 69 | 5,7 |

Dann wurde die Reaktionszeit variiert, nachfolgend dargestellt für den Katalysator Cu/Ru (3:1)/SiO₂; 5 Gew.-%.

**Tabelle 7: Variation der Reaktionszeit bei 220°C und 10 bar H₂-Druck**

| **Katalysator** | **t [h]** | **m (Kat.) [mg]** | **Umsatz [%]** | **Ausbeute BHMF [%]** | **Ausbeute DMF [%]** |
|---|---|---|---|---|---|
| Cu/Ru (3:1)/ SiO₂ 5 Gew.-% | 1,5 | 20,0 | 65 | 54 | 2,5 |
| Cu/Ru (3:1)/ SiO₂ 5 Gew.-% | 3,0 | 20,0 | 96 | 74 | 4,1 |
| Cu/Ru (3:1)/ SiO₂ 5 Gew.-% | 6,0 | 20,2 | 99 | 68 | 11 |
| Cu/Ru (3:1)/ SiO₂ 5 Gew.-% | 9,0 | 20,2 | 99 | 71 | 9,2 |
| Cu/Ru (3:1)/ SiO₂ 5 Gew.-% | 15 | 20,2 | 99 | 48 | 16 |
| Cu/Ru (3:1)/ SiO₂ 5 Gew.-% | 20 | 20,2 | 99 | 21 | 32 |

Die Ausbeute am 2,5-Dimethylfuran nimmt über den Reaktionsverlauf zu.

**Tabelle 8: Variation der Reaktionszeit bei 230°C und 10 bar H₂-Druck**

| **Katalysator** | **t [h]** | **m (Kat.) [mg]** | **Umsatz [%]** | **Ausbeute BHMF [%]** | **Ausbeute DMF [%]** |
|---|---|---|---|---|---|
| Cu/Ru (3:1)/ SiO₂ 5 Gew.-% | 1,5 | 20,1 | 83 | 70 | 3,7 |
| Cu/Ru (3:1)/ SiO₂ 5 Gew.-% | 3,0 | 20,1 | 95 | 74 | 7,7 |
| Cu/Ru (3:1)/ SiO₂ 5 Gew.-% | 6,0 | 20,1 | 98 | 50 | 20 |
| Cu/Ru (3:1)/ SiO₂ 5 Gew.-% | 9,0 | 20,2 | 99 | 42 | 20 |
| Cu/Ru (3:1)/ SiO₂ 5 Gew.-% | 15 | 20,2 | 100 | 2,8 | 42 |
| Cu/Ru (3:1)/ SiO₂ 5 Gew.-% | 20 | 20,2 | 100 | 0,7 | 48 |

Analog zu den Versuchen mit Furfural wurde auch bei HMF als Edukt die Reaktionszeit variiert. Die aufgenommenen Kinetiken bei 220°C und 230°C Reaktionstemperatur zeigten einen vollständigen Umsatz von HMF ab einer Reaktionszeit von 6 Stunden. Die höchsten Ausbeuten wurden mit 32% (220°C) und 48% (230°C) bei einer Reaktionszeit von 20 Stunden erreicht.

Die Auswirkungen von Wasserstoffdruck und Reaktionstemperatur auf die Reaktion sind ähnlich wie bei den Versuchen mit Furfural. Bei erhöhter Reaktionstemperatur sind die Ausbeuten an DMF größer.

Die erfindungsgemäßen Katalysatoren zeigen ein sehr gutes Eigenschaftsprofil und sind einfach und preiswert herstellbar, ohne dass dabei schädliche Chemikalien wie Chrom verwendet werden müssten.

## Patentansprüche

1. Verfahren zur katalytischen Hydrodesoxygenierung von Furan-Derivaten enthaltenden Zusammensetzungen bei dem die Furan-Derivate enthaltende Zusammensetzung
a) bei Temperaturen von 200 bis 250°C,
b) unter Wasserstoffatmosphäre eines Druckes von 5 bis 40 bar,
c) für einen Zeitraum von 15 Minuten bis 30 Stunden,
mit einem Katalysator in Gegenwart eines Lösemittels in Kontakt gebracht und umgesetzt wird,
wobei ein Katalysator eingesetzt wird, der **dadurch gekennzeichnet ist, dass**
i) dessen aktive Spezies Cu/Ru im rechnerischen Stoffmengenverhältnis 3:1 bis 3:2, geträgert auf Siliciumdioxid ist, und
ii) dass die Menge an Ru auf dem Träger 0,5 bis 8 Gew.-% beträgt.

2. Verfahren nach Anspruch 1, **dadurch gekennzeichnet, dass** das rechnerische Stoffmengenverhältnis Cu/Ru 3:1 oder 3:2, bevorzugt 3:1, beträgt.

3. Verfahren nach Anspruch 1, **dadurch gekennzeichnet, dass** die Menge an Ru auf dem Träger 1 Gew.-% oder 5 Gew.-% beträgt.

4. Verfahren nach Anspruch 1, **dadurch gekennzeichnet, dass** vor dem Inkontaktbringen der Furan-Derivate enthaltenden Zusammensetzungen mit dem Katalysator der Sauerstoff aus diesen entfernt wird, insbesondere durch Spülung mit Wasserstoff und/oder Stickstoff.

5. Verfahren nach Anspruch 1, **dadurch gekennzeichnet, dass** dass die Furan-Derivate enthaltene Zusammensetzung Pyrolyseöl ist.

6. Verfahren nach Anspruch 1 oder 5, **dadurch gekennzeichnet, dass** die Furan-Derivate enthaltende Zusammensetzungen
- Furfural oder
- 5-Hydroxymethylfurfural oder
- Furfural und 5-Hydroxymethylfurfural
enthalten oder daraus bestehen.

7. Verfahren nach Anspruch 6, **dadurch gekennzeichnet, dass** Furfural zu 2-Hydroxymethylfuran und/oder Methylfuran, bevorzugt Methylfuran umgesetzt wird.

8. Verfahren nach Anspruch 6, **dadurch gekennzeichnet, dass** 5-Hydroxymethylfurfural zu 2,5-Bis-(hydroxymethyl)furan und/oder 2,5-Dimethylfuran umgesetzt wird.

9. Verfahren nach Anspruch 1, **dadurch gekennzeichnet, dass** als Lösemittel solche mit einer Polarität delta EN = 0,4 - 1,7, bevorzugt ausgewählt aus der Gruppe bestehend aus Ethanol, Propanolen, Butanolen, Pentanolen und Gemischen davon, besonders bevorzugt Butanole, eingesetzt werden.

10. Katalysator, insbesondere für die Hydrodesoxygenierung, **dadurch gekennzeichnet ist, dass**
i) dessen aktive Spezies Cu/Ru im rechnerischen Stoffmengenverhältnis 3:1 bis 3:2, geträgert auf Siliciumdioxid ist, und
ii) dass die Menge an Ru auf dem Träger 0,5 bis 8 Gew.-% beträgt.

11. Katalysator nach Anspruch 10, **dadurch gekennzeichnet, dass** das rechnerische Stoffmengenverhältnis Cu/Ru 3:1 oder 3:2, bevorzugt 3:1, beträgt.

12. Katalysator nach Anspruch 10, **dadurch gekennzeichnet, dass** die Menge an Ru auf dem Träger 1 Gew.-% oder 5 Gew.-% beträgt.

13. Verfahren zur Herstellung des Katalysators gemäß Anspruch 10 mittels incipient wetness impregnation, umfassend oder bestehend aus den Schritten
1) Lösen von
a) Kupfer(II)nitrat-Hemipentahydrat in vollentsalztem Wasser
und
b) Rutheniumacetylacetonat in Ethanol,
2a) gegebenenfalls thermische Vorbehandlung von hochdispersem Siliciumdioxid zur Befreiung von organischen Verunreinigungen,
2b) Zugabe der in Schritt 1a) erhaltenen Lösung zu dem trockenem, pulverförmigen hochdispersen Siliciumdioxid und Trocknen,
2c) Zugabe der in Schritt 1b) erhaltenen Lösung zu dem in Schritt 2b) erhaltenen Feststoff und Trocknen,
wobei das Porenvolumen des Siliciumdioxids dem Volumen der zugegebenen Lösungen 1a) und 1b) entspricht,
3) gegebenenfalls Homogenisieren der in Schritt 2c) erhaltenen Substanz,
4) Kalzinieren des getrockneten Katalysators in einem Ofen,
5) Reduzieren des in Schritt 4) erhaltenen Katalysators im Wasserstoffstrom,
6) gegebenenfalls Abkühlenlassen auf Raumtemperatur und
7) Passivieren des erhaltenen Katalysators durch Überleiten eines Sauerstoff/Stickstoffstromes.
